# EUROPÄISCHE PATENTSCHRIFT

(11) **EP 0 603 691 B1**
(45) Veröffentlichungstag und Bekanntmachung des Hinweises auf die Patenterteilung: **02.04.1997**
(21) Anmeldenummer: 93120030.7
(22) Anmeldetag: 11.12.1993
(51) Int. Cl.: A62D 3/00

(54) **Verfahren zur basischen Aufarbeitung von kupferhaltigen Rückständen der direkten Synthese von Organochlor- und/oder Chlorsilanen**
Process for the basic treatment of copper-containing residues from the direct synthesis of organochlorosilanes and/or chlorosilanes
Procédé pour le traitement basique des résidus contenant du cuire de la synthése directe des organochlorosilanes et/ou chlorosilanes

(30) Priorität: 19.12.1992 DE 4243223
(43) Veröffentlichungstag der Anmeldung: 29.06.1994
(73) Patentinhaber: Hüls Silicone Gesellschaft mit beschränkter Haftung, 01612 Nünchritz (DE)
(72) Erfinder: Brumme, Johannes, Dr. rer. nat., D-01169 Dresden (DE); Heinze, Ulrich, Dr.-Ing., D-01612 Nünchritz (DE); Tamme, Gudrun, D-01468 Boxdorf (DE)
(74) Vertreter: Zöllner, Gudrun

(56) Entgegenhaltungen:
- DATABASE WPI Week 9013, Derwent Publications Ltd., London, GB; AN 90-098196 & SU-A-1 490 098 (GIPROTSVETMETOBRADO)
- DATABASE WPI Week 9013, Derwent Publications Ltd., London, GB; AN 90-098196 & SU-A-1 490 098

## Beschreibung

Die Erfindung betrifft ein Verfahren zur basischen Aufarbeitung kupferhaltiger Rückstände der Direkten Synthese von Organochlor- und/oder Chlorsilanen, die hauptsächlich in Form von Reaktorrückständen, Filterstäuben oder Hydrolyseschlämmen bei der technischen Umsetzung von Siliziummetall mit Organochloriden oder Chlorwasserstoff anfallen. Die erhaltenen Feststoffe sind deponiefähig und enthalten weniger als 100 mg/kg eluierbares Kupfer.

Bei der Herstellung von Organochlor- und/oder Chlorsilanen durch kupferkatalysierte Umsetzung von Alkyl- bzw. Arylchloriden oder Chlorwasserstoff mit technischem Siliziummetall, im besonderen bei der Herstellung von Methylchlorsilanen nach der Müller-Rochow-Synthese sowie bei der Herstellung von Chlorsilanen durch Hydrochlorierung von technischem Siliziummetall, werden an verschiedenen Stellen des Prozesses feste Rückstände erhalten. Feinkörnige Bestandteile, die mit dem Produktstrom ausgetragen werden, fallen z.B. in Fitereinrichtungen oder als Schlämme nach der hydrolytischen Aufarbeitung der hochsiedenden Destillationsrückstände an. Der in den Reaktoren verbleibende Teil der sogenannten Kontaktmasse wird nach Erreichen eines bestimmten Abarbeitungsgrades gegen unverbrauchte Kontaktmasse ausgetauscht.

Alle diese festen Rückstände enthalten neben Silizium die Bestandteile des Katalysatorsystems, wie z.B. Kupfer, die im technischen Siliziummetall enthaltenen Begleitelemente, wie z.B. Eisen, Aluminium oder Kalzium, in angereicherter Form sowie weitere, dem Fachmann bekannte Verbindungen. Diese Rückstände sind so praktisch unbrauchbar und lassen sich auf Grund der vielfältigen Bestandteile nur unter erheblichem ökonomischen Aufwand entsorgen.

Zur Behandlung der kupferhaltigen Kontaktmassen-Rückstände sind prinzipiell zwei Grenzfälle denkbar:
(a) Überführen des Kupferanteils in lösliche Verbindungen oder
(b) vollständiges Fixieren des Kupfers auf dem Silizium.

Im Fall (a) wird nach der Behandlung mit Wasser oder Mineralsäuren und anschließender Filtration sowie Waschstufen ein kupferarmer Feststoff erhalten, der deponiert, der Metallurgie zugeführt, wieder zur Synthese von Organochlor- und/oder Chlorsilanen eingesetzt oder anderweitig verwendet werden kann. Es fallen dabei jedoch auch die konzentrierte Mutterlauge (Kupfersalze und Salze der in der Kontaktmasse enthaltenen Verunreinigungen) und verdünnte Lösungen aus den notwendigen Waschprozessen an, deren Aufarbeitung und Entsorgung aufwendig ist.

Im Fall (b) wird der Kupferkatalysator in eine unlösliche Form überführt und verbleibt auf den festen Rückständen. Das Filtrat ist dann weitgehend frei von Kupfer und anderen Metallen und enthält nur noch die unter diesen Bedingungen löslichen Verbindungen.

EP 428 337 beschreibt ein Verfahren zur Inertisierung abgearbeiteter Kontaktmasse aus der Direkten Synthese von Organohalogensilanen. Dabei wird die verbrauchte siliziumhaltige Kontaktmasse, die noch den Katalysator, Reaktionsprodukte der Umsetzung sowie andere, dem Fachmann bekannte Verunreinigungen enthält, in einer basischen Lösung aus Alkali- oder Erdalkalioxiden, -hydroxiden oder -karbonaten mit einem pH-Wert von 10 bis 14 mehrere Stunden bei Temperaturen von 50 bis 100 °C gerührt, wobei das Gewichtsverhältnis von basischer Lösung zu Feststoff 2:1 bis 10: 1 beträgt. Im Ergebnis dieser Behandlung wird nach Filtration und Trocknung bei 110 °C ein Feststoff erhalten, der bei 390 °C keine nennenswerten thermischen Aktivitäten mehr zeigt.
Der Verbleib der restlichen Bestandteile der verwendeten Kontaktmasse wird nicht beschrieben.
Ebenfalls wird die Entstehung von Wasserstoff nicht erwähnt, obwohl der Fachwelt bekannt ist, daß bereits bei der Einwirkung von verdünnten alkalischen Lösungen auf (zerkleinertes) Siliziummetall sehr leicht Wasserstoff entsteht (W. Trzebiatowski, Lehrbuch der Anorganischen Chemie, Deutscher Verlag der Wissenschaften, Berlin, 1969, Seite 347).
Nachteile dieses Verfahrens sind neben der Freisetzung von Wasserstoff die relativ großen Flüssigkeitsmengen und damit anfallenden Filtrate sowie die langen Kontaktzeiten zwischen der verwendeten basischen Lösung und dem siliziumhaltigen Feststoff.

In der DE-OS 39 41 827 wird ein Verfahren zur Aufarbeitung fester Rückstände der Umsetzung von Rohsilizium mit Chlor oder Chlorwasserstoff beschrieben. Die Rückstände werden in wäßriger Phase mit einem Überschuß an Kalzium-Basen behandelt, wobei die flüssigen Bestandteile in den Prozeß zurückgeführt werden. In den angeführten Rückständen ist kein Kupfer enthalten.
Der Nachteil des Verfahrens besteht im einzusetzenden Überschuß an Kalzium-Basen, was eine große Menge abzutrennenden Feststoffes bedingt.

Der Einsatz von organischen Bindern, wie z.B. Stärke, Lignin oder Wasserglas, wird in der US-PS 5 126 203 beschrieben. Ziel des Patentes ist die Herstellung von deponiefähigen Pellets aus abgearbeiteter Kontaktmasse. Aussagen zu Metallgehalten in den erhaltenen Pellets werden nicht gemacht.

Aufgabe der Erfindung war das Auffinden eines Verfahrens, das, bei technologisch einfacher Durchführung, unter milden Bedingungen und unter Minimierung der Wasserstoffentwicklung, die Aufarbeitung der kupferhaltigen Rückstände der Direkten Synthese von Organochlor- und/oder Chlorsilanen zu deponiefähigen Feststoffen gestattet.

Gegenstand der Erfindung ist das Verfahren nach dem unabhängigen Anspruch 1; bevorzugte Ausführungsformen sind Gegenstand der abhängigen Ansprüche 2-9.

Überraschenderweise wurde gefunden, daß durch Umsetzung von wäßriger Alkali-Alkylsiliconatlösung mit den kupferhaltigen Rückständen der Direkten Synthese von Organochlor- und/oder Chlorsilanen im Gew.-verhältnis von kleiner/gleich 1, vorzugsweise von 0,5 zu 1, bei Einhaltung eines pH-Wertes von größer 7, ein Feststoff erhalten wird, dessen Anteil an eluierbarem Kupfer kleiner 100 mg/kg ist.

Kupferhaltige Rückstände sind dabei die bei der Herstellung von Organochlor- und/oder Chlorsilanen anfallenden Reaktorrückstände, Filterstäube, Hydrolyse- und/oder Naßwäscheschlämme, die neben Silizium noch u.a. Eisen, Aluminium, Zink, Kalzium, Blei und Kupfer sowie mono-, oligo- und polymere Silane, Siloxane und Silmethylene enthalten können.

Als wäßrige Alkali-Alkylsiliconatlösung wird eine nach bekannten Verfahren, wie z.B. durch Umsetzung von Alkylalkoxysilanen mit Alkalilauge hergestellte, alkalisch-wäßrige Lösung von Natrium- oder Kalium-Methylsiliconat, eingesetzt, die einen Methylsilicongehalt (MeSiO_{3/2}-Gehalt) von 0,5 bis 5 Gew.-%, vorzugsweise von 1 bis 3 Gew.-% aufweist. Die Lösungen fallen bei der Herstellung üblicherweise mit einem Methylsilicongehalt von 20 bis 30 Gew.-% an und können anschließend auf die gewünschte Konzentration verdünnt werden.

Anstatt der alkalisch, wäßrigen Lösung von Alkali-Alkylsiliconat können auch andere alkalische Vebindungen, wie z.B. Natron- oder Kalilauge, Kalziumoxid oder -hydroxid, eingesetzt werden.

Die Umsetzung kann erfolgen bei Temperaturen von 20 bis 80 °C, vorzugsweise bei 30 bis 60 °C, und während 15 bis 60 Minuten, vorzugsweise während 20 bis 40 Minuten, wobei aufgrund der mit steigender Temperatur und Verweilzeit zunehmenden Wasserstoffentwicklung niedrige Temperaturen und kurze Zeiten bevorzugt sind.

Gegebenenfalls im erfindungsgemäß hergestellten Feststoff enthaltene freie Flüssigkeit wird abgetrennt und kann zur Einstellung des gewünschten Gew.-verhältnisses Alkali-Alkylsiliconatlösung/Rückstand wiederverwendet werden.

Eine besonders vorteilhafte Ausgestaltung des erfindungsgemäßen Verfahrens besteht darin, das Gew.-verhältnis von wäßriger Alkali-Alkylsiliconatlösung so zu wählen, daß sich nach Abschluß der Umsetzung ein End-pH-Wert von mindestens 4 einstellt. Damit gelingt es, die bei der Einwirkung von Basen bekannte Wasserstoffentwicklung zu minimieren. Die Metallionenkonzentration in der gegebenenfalls anfallenden freien Flüssigkeit ist dabei so gering, daß zusätzliche Maßnahmen zu deren Behandlung nicht erforderlich sind.

Ebenfalls vorteilhaft ist das Einleiten von Luft, vorzugsweise mit einem Volumenstrom von 3 bis 5 l/h, entweder während der Umsetzung der alkalischen Lösung mit dem Rückstand oder beim anschließenden Abkühlen auf Raumtemperatur.

Durch das erfindungsgemäße Gew.-verhältnis von wäßriger Alkali-Alkylsiliconatlösung zu kupferhaltigem Rückstand der Direkten Synthese, gegebenenfalls unterstützt durch das Einleiten von Luft, ist es möglich, filtratfrei zu arbeiten und den Feststoff in einer erdfeuchten, stichfesten Konsistenz, mit einem Mindestwassergehalt von 10 bis 15 Gew.-% zur Verhütung der Staubbildung bei z.B. einer oberirdischen Ablagerung, zu erhalten. Weiterhin ermöglicht das erfindungsgemäße Verfahren die Minimierung der Wasserstoffentwicklung durch Erreichen eines End-pH-Wertes von mindestens 4, ohne die im alkalischen Milieu gefällten Verbindungen wieder zu lösen.

Damit gelingt es mit dem erfindungsgemäßen Verfahren die Kriterien der "Zweiten allgemeinen Verwaltungsvorschrift zum Abfallgesetz (TA Abfall)" (GMBl 8/91 vom 12.03.91) für eine oberirdische Deponie zu erfüllen, die für die wesentlichsten Bestandteile folgende Grenzen für die Eluatwerte festschreibt:

| | | |
|---|---|---|
| Kupfer | ≤ | 10 mg/l |
| Zink | ≤ | 10 mg/l |
| Blei | ≤ | 2 mg/l |
| Nickel | ≤ | 2 mg/l . |

### Ausführungsbeispiele

### Beispiel 1

In einem Rührkolben mit Rührer, Innenthermometer und Rückflußkühler wurden während 60 Minuten bei einer Temperatur von 60 °C sowie unter gleichzeitigem Durchleiten von Luft mit einem Volumenstrom von 4 l/h intensiv vermischt:
200 g einer abgearbeiteten Kontaktmasse aus der Direkten Synthese von Methylchlorsilanen, erhalten durch kupferkatalysierte Umsetzung von Siliziummetall mit Chlormethan, die folgende Hauptbestandteile aufweist:

| | |
|---|---|
| Kupfer | 7,1 Gew.-% (0,27 Gew.-% löslicher Anteil) |
| Eisen | 3,5 Gew.-% |
| Aluminium | 0,5 Gew.-% |
| Kohlenstoff | 1,65 Gew.-% |
| Silizium | 83,5 Gew.-% |

und 100 g einer wäßrigen Kalium-Methylsiliconatlösung mit einem Methylsilicongehalt von 1,3 Gew.-%.

Anschließend kühlte das Reaktionsgemisch unter Rühren auf Raumtemperatur ab. Eine Filtration war nicht erforderlich. Nach Schütteln einer Probe über 8 Stunden bei 50 Hz konnte kein freies Wasser nachgewiesen werden.

Zur Bestimmung des Trockenverlustes wurde der erhaltene Feststoff bei 150 °C fünf Stunden in einem Trockenschrank getrocknet. Zur Ermittlung der Metallgehalte im Eluat wurden 100 g Feststoff mit 1000 ml destilliertem Wasser versetzt und 24 Stunden in einem Über-Kopf-Schüttler belassen. Nach Abtrennung des Feststoffes erfolgte im erhaltenen Filtrat die Bestimmung der Metallionenkonzentration mittels Atom-Absorptions-Spektroskopie.

Die Ergebnisse sind in Tabelle 1 enthalten.

**Tabelle 1**

| | |
|---|---|
| Feuchter Filterkuchen | 268 g |
| Trockenverlust | 25,9 % |
| Kupfer | 1,74 mg/l |
| Nickel | 0,011 mg/l |
| Zink | 0,102 mg/l |
| Blei | < 0,01 mg/l |
| Eisen | 0,385 mg/l |
| Vanadium | < 0,05 mg/l |

### Beispiel 2

Durchführung analog Beispiel 1, jedoch wurden 150 g der festen Rückstände mit 60 g einer wäßrigen Lösung behandelt, die durch Verdünnen einer Kalium-Methylsiliconatlösung mit einem Methylsiliconatgehalt von 20 Gew.-% im Gew.-verhältnis 1 zu 20 hergestellt wurde.
Eine Filtration war nicht erforderlich. Freies Wasser wurde nicht nachgewiesen.
Es wurden 184 g eines Filterkuchens mit 19,4 Gew.-% Trockenverlust erhalten. Das Eluat enthielt 0,4 mg/l Kupfer.

### Beispiel 3

Durchführung analog Beispiel 1, jedoch ohne Durchleiten von Luft. 200 g des festen Rückstandes wurden mit 100 g einer wäßrigen Lösung behandelt, die durch Verdünnen einer Kalium-Methylsiliconatlösung mit einem Methylsilicongehalt von 20 Gew.-% im Gew.-verhältnis 1 zu 10 erhalten wurde.
Die Reaktionszeit betrug 30 Minuten. Während der Reaktion entstanden 2,5 ml Wasserstoff pro g eingesetzten Rückstandes.
Nach Abkühlen und Filtration wurden 248 g eines Filterkuchens mit 19,9 Gew.-% Restfeuchte erhalten sowie 49 g Filtrat erhalten.
Das Eluat enthielt 1,6 mg/l Kupfer.

### Beispiel 4

Durchführung analog Beispiel 3, jedoch wurde die Reaktion während einer Stunde bei 30 °C durchgeführt.
Das Volumen des entstehenden Wasserstoffs betrug 0,75 ml pro g eingesetzten Feststoffes.
Erhalten wurden 234 g Filterkuchen mit 14,7 Gew.-% Restfeuchte sowie 63 g Filtrat.
Im Eluat waren 0,64 mg/l Kupfer enthalten.

### Beispiel 5

Durchführung analog Beispiel 1. 200 g abgearbeitete Kontaktmasserückstände wurden mit 100 g einer wäßrigen Kalium-Methylsiliconatlösung mit einem Methylsilicongehalt von 1,3 Gew.-% während einer Stunde bei 60 °C behandelt.
Erhalten wurde ein Feststoff ohne freies Wasser.

Die Ergebnisse enthält Tabelle 2.

**Tabelle 2**

| | |
|---|---|
| Feuchter Filterkuchen | 245 g |
| Trockenverlust | 18,5 % |
| Kupfer | 0,41 mg/l |
| Nickel | 0,01 mg/l |
| Zink | 0,114 mg/l |
| Blei | < 0,01 mg/l |
| Eisen | 0,19 mg/l |
| Vanadium | < 0,05 mg/l |

### Beispiel 6

Durchführung analog Beispiel 1. 200 g abgearbeitete Kontaktmasserückstände wurden mit 80 g einer wäßrigen Kalium-Methylsiliconatlösung mit einem Methylsilicongehalt von 1 Gew.-% während einer Stunde bei 60 °C behandelt.
Erhalten wurden ein Feststoff sowie 14 g freies Wasser.

Die Ergebnisse enthält Tabelle 3.

**Tabelle 3**

| | |
|---|---|
| Feuchter Filterkuchen | 253 g |
| Trockenverlust | 21,4 % |
| Kupfer | 0,37 mg/l |
| Nickel | 0,013 mg/l |
| Zink | 0,29 mg/l |
| Blei | < 0,01 mg/l |
| Eisen | 0,94 mg/l |
| Vanadium | < 0,05 mg/l |

### Beispiel 7

Durchführung analog Beispiel 1, jedoch wurden 200 g feste, methylchlorsilanhaltige Rückstände mit 200 g einer wäßrigen Kalium-Methylsiliconatlösung mit einem Methylsilicongehalt von 1,6 Gew.-% während 30 Minuten bei 60 °C behandelt.
Erhalten wurden ein Feststoff und 124 g Filtrat mit einem pH-Wert von 4, dessen Kupfergehalt 0,5 mg/l betrug.

Die Ergebnisse enthält Tabelle 4.

**Tabelle 4**

| | |
|---|---|
| Feuchter Filterkuchen | 273 g |
| Trockenverlust | 27,3 % |
| Kupfer | 0,3 mg/l |
| Nickel | 0,026 mg/l |
| Zink | 0,375 mg/l |
| Blei | < 0,02 mg/l |
| Eisen | 0,84 mg/l |
| Vanadium | < 0,05 mg/l |

### Beispiel 8

200 g des im Beispiel 7 eingesetzten festen, methylchlorsilanhaltigen Rückstandes wurden mit 200 g einer 1,2 %igen Natronlauge 30 Minuten bei 60 °C behandelt.
Erhalten wurden 275 g Feststoff mit einem Trockenverlust von 27,3 % sowie 121 g Filtrat mit einem pH-Wert von 6.
Im Feststoff wurden die Eluatwerte wie in Beispiel 1 beschrieben ermittelt, im Filtrat erfolgte die Bestimmung der Metallionenkonzentration mittels Atom-Absorptions-Spektroskopie.
Die Ergebnisse sind in Tabelle 5 dargestellt.

**Tabelle 5**

| Verbindungen | Filterkuchen | Filtrat |
|---|---|---|
| Kupfer | 0,83 mg/l | 0,4 mg/l |
| Nickel | < 0,01 mg/l | 0,02 mg/l |
| Zink | 0,12 mg/l | 1,22 mg/l |
| Blei | < 0,02 mg/l | < 0,02 mg/l |
| Eisen | 0,23 mg/l | 0,47 mg/l |
| Vanadium | < 0,02 mg/l | < 0,05 mg/l |

Als Vergleich wurde der oben eingesetzte feste, methylchlorsilanhaltige Rückstand mit 200 g Wasser behandelt. Das saure Filtrat wies einen pH-Wert von 2 auf und enthielt 670 mg/l Kupfer. Im Feststoff wurden die folgenden Eluatwerte bestimmt:

**Tabelle 6**

| | |
|---|---|
| Kupfer | 41,0 mg/l |
| Nickel | 3,46 mg/l |
| Zink | 23,3 mg/l |
| Blei | < 0,01 mg/l |
| Eisen | 120 mg/l |
| Vanadium | 0,31 mg/l |

### Beispiel 9

200 g feste Rückstände aus Beispiel 1 und 80 g 0,1 %iger Natronlauge wurden 1 Stunde bei 60 °C umgesetzt. Erhalten wurden 235 g eines Feststoffes mit 15,8 % Trockenverlust und 43 ml Filtrat.
Die Eluatwerte sind in Tabelle 7 dargestellt.

**Tabelle 7**

| | |
|---|---|
| Kupfer | 0,76 mg/l |
| Nickel | 0,20 mg/l |
| Zink | 0,31 mg/l |
| Blei | < 0,02 mg/l |
| Eisen | 0,08 mg/l |
| Vanadium | < 0,02 mg/l |

### Beispiel 10

200 g der festen Rückstände aus Beispiel 1 wurden mit 112 g einer Lösung von 37,4 g Kalziumhydroxid in Wasser 1 Stunde bei 60 °C und unter Durchleiten von 3 l/h Preßluft behandelt. Erhalten wurden 240 g Feststoff ohne freies Wasser. Der Trockenverlust betrug 17,5 %. Aus dem feuchten Feststoff wurden 0,06 mg/l Kupfer eluiert.

## Patentansprüche

1. Verfahren zur basischen Aufarbeitung von kupferhaltigen Rückständen der direkten Synthese von Organochlor- und/oder Chlorsilanen zu deponiefähigen Feststoffen,
dadurch gekennzeichnet, daß eine wäßrige Lösung von Alkali-Alkylsiliconat, Natron- oder Kalilauge, Kalziumoxid oder - hydroxid mit den kupferhaltigen Rückständen im Gew.-verhältnis von kleiner/gleich 1 bei Einhaltung eines pH-Wertes von größer 7 wird.

2. Verfahren nach Anspruch 1, dadurch gekennzeichnet, daß die Alkali-Alkylsiliconatlösung eine alkalisch-wäßrige Lösung von Natrium-Methylsiliconat ist.

3. Verfahren nach Anspruch 1, dadurch gekennzeichnet, daß die Alkali-Alkylsiliconatlösung eine alkalisch-wäßrige Lösung von Kalium-Methylsiliconat ist.

4. Verfahren nach Anspruch 1, dadurch gekennzeichnet, daß die wäßrige Alkali-Alkylsiliconatlösung mit den kupferhaltigen Rückständen im Gew.-verhältnis von 0,5 zu 1 umgesetzt wird.

5. Verfahren nach Anspruch 1, dadurch gekennzeichnet, daß die wäßrige Alkali-Alkylsiliconat-Lösung einen Methylsilicongehalt von 0,5 bis 5 Gew.-% aufweist.

6. Verfahren nach Anspruch 5, dadurch gekennzeichnet, daß die wäßrige Alkali-Alkylsiliconatlösung einen Methylsilicongehalt von 1 bis 3 Gew.-% aufweist.

7. Verfahren nach Anspruch 1, dadurch gekennzeichnet, daß die Temperatur 20 bis 80 °C beträgt.

8. Verfahren nach Anspruch 7, dadurch gekennzeichnet, daß die Temperatur 30 bis 60 °C beträgt.

9. Verfahren nach Anspruch 1 bis 8, dadurch gekennzeichnet, daß sich nach der Umsetzung ein End-pH-Wert von mindestens 4 einstellt.

## Claims

1. Process for the basic reprocessing of copper-containing residues of the direct synthesis of organochlorosilanes and/or chlorosilanes to give landfillable solids, characterized in that an aqueous solution of alkali metal alkylsiliconate, sodium hydroxide solution or potassium hydroxide solution or calcium oxide or calcium hydroxide is reacted with the copper-containing residues in a weight ratio of less than or equal to 1, with a pH greater than 7 being maintained.

2. Process according to Claim 1, characterized in that the alkali metal alkylsiliconate solution is an aqueous alkaline solution of sodium methylsiliconate.

3. Process according to Claim 1, characterized in that the alkali metal alkylsiliconate solution is an aqueous alkaline solution of potassium methylsiliconate.

4. Process according to Claim 1, characterized in that the aqueous alkali metal alkylsiliconate solution is reacted with the copper-containing residues in a weight ratio of 0.5 to 1.

5. Process according to Claim 1, characterized in that the aqueous alkali metal alkylsiliconate solution has a methylsilicone content of 0.5 to 5 % by weight.

6. Process according to Claim 5, characterized in that the aqueous alkali metal alkylsiliconate solution has a methylsilicone content of 1 to 3 % by weight.

7. Process according to Claim 1, characterized in that the temperature is 20 to 80°C.

8. Process according to Claim 7, characterized in that the temperature is 30 to 60°C.

9. Process according to Claims 1 to 8, characterized in that a final pH of at least 4 is established after the reaction.

## Revendications

1. Procédé de traitement basique de résidus cuprifères issus de la synthèse directe d'organochlorosilanes et / ou de chlorosilanes en solides pouvant être mis en décharge, caractérisé en ce qu'une solution aqueuse d'alcali-alkylsiliconate, de soude ou de potasse caustique ou d'oxyde ou d'hydroxyde de calcium est transformée avec les résidus cuprifères à un rapport de poids inférieur ou égal à 1 et en maintenant le ph supérieur à 7.

2. Procédé selon la revendication 1, caractérisé en ce que la solution d'alcali-alkylsiliconate est une solution aqueuse alcaline de sodium-méthylsiliconate.

3. Procédé selon la revendication 1, caractérisé en ce que la solution d'alcali-alkylsiliconate est une solution aqueuse alcaline de potassium-méthylsiliconate.

4. Procédé selon la revendication 1, caractérisé en ce que la solution aqueuse d'alcali-alkylsiliconate est transformée avec les résidus cuprifères à un rapport de poids de 0,5 pour 1.

5. Procédé selon la revendication 1, caractérisé en ce que la solution aqueuse d'alcali-alkylsiliconate enregistre une teneur en méthylsilicone de 0,5 à 5 en % de poids.

6. Procédé selon la revendication 5, caractérisé en ce que la solution aqueuse d'alcali-alkylsiliconate enregistre une teneur en méthylsilicone de 1 à 3 en % de poids.

7. Procédé selon la revendication 1, caractérisé en ce que la température se situe entre 20 et 80°C.

8. Procédé selon la revendication 7, caractérisé en ce que la température se situe entre 30 et 60°C.

9. Procédé selon la revendication 1 à 8, caractérisé en ce que le ph se normalise après la transformation à une valeur finale d'au moins 4.
